# EUROPÄISCHE PATENTSCHRIFT

(11) **EP 3 959 085 B1**
(45) Veröffentlichungstag und Bekanntmachung des Hinweises auf die Patenterteilung: **27.08.2025**
(21) Anmeldenummer: 20716719.8
(22) Anmeldetag: 25.03.2020
(51) Int. Cl.: B60C 1/00, C07F 7/18, C08K 3/36, C08K 5/548, C08L 7/00

(54) **SILAN, KAUTSCHUKMISCHUNG ENTHALTEND DAS SILAN UND FAHRZEUGREIFEN, DER DIE KAUTSCHUKMISCHUNG IN WENIGSTENS EINEM BAUTEIL AUFWEIST SOWIE VERFAHREN ZUR HERSTELLUNG DES SILANS**
SILANE, RUBBER MIXTURE CONTAINING THE SILANE, VEHICLE TIRE COMPRISING THE RUBBER MIXTURE IN AT LEAST ONE COMPONENT, AND PROCESS FOR PRODUCING THE SILANE
SILANE, MÉLANGE DE CAOUTCHOUC CONTENANT LE SILANE ET PNEUMATIQUE DE VÉHICULE QUI COMPREND LE MÉLANGE DE CAOUTCHOUC DANS AU MOINS UN ÉLÉMENT AINSI QUE PROCÉDÉ POUR FABRIQUER LE SILANE

(30) Priorität: 26.04.2019 DE 102019205996
(43) Veröffentlichungstag der Anmeldung: 02.03.2022
(60) Teilanmeldung: 25178783.4
(73) Patentinhaber: Continental Reifen Deutschland GmbH, 30175 Hannover (DE)
(72) Erfinder: DAUER, David-Raphael, 30165 Hannover (DE); STROHMEIER, Julian, 30165 Hannover (DE); JACOB, Andreas, 30165 Hannover (DE); JÜRGES, Jaana, 30165 Hannover (DE); DAVIN, Julien, 30165 Hannover (DE); SCHÖFFEL, Julia, 30165 Hannover (DE)
(74) Vertreter: Continental Corporation
(86) Internationale Anmeldenummer: PCT/EP2020/058404
(87) Internationale Veröffentlichungsnummer: WO 2020/216567

(56) Entgegenhaltungen:
- WO-A1-2017/036268
- WO-A1-2019/001822
- WO-A1-2019/001823
- T. TIMOTHY NADASDI ET AL: "Synthesis, structure, and reactivity of Lewis acidic cyclopentadienyltitanium dithiolate complexes", INORGANIC CHEMISTRY, vol. 32, no. 3, 1 February 1993 (1993-02-01), EASTON, US, pages 347 - 356, XP055700927, ISSN: 0020-1669, DOI: 10.1021/ic00055a022

## Beschreibung

Die Erfindung betrifft ein Silan, eine Kautschukmischung enthaltend das Silan und einen Fahrzeugreifen, der die Kautschukmischung in wenigstens einem Bauteil aufweist, sowie ein Verfahren zur Herstellung des Silans.

Silane sind als Zuschlagstoffe für Kautschukmischungen, insbesondere für Fahrzeugreifen, bekannt, und zwar insbesondere für Kautschukmischungen, die wenigstens eine Kieselsäure als Füllstoff enthalten. Im Stand der Technik bekannte Silane gehen beispielsweise aus der DE 2536674 C3 und der DE 2255577 C3 hervor. Die Kieselsäure wird dabei mittels derartiger Silane an das oder die Polymer(e) angebunden, wodurch die Silane auch als Kupplungsagenzien bezeichnet werden. Durch die Anbindung der Kieselsäure mittels Silan-Kupplungsagenzien ergeben sich Vorteile hinsichtlich des Rollwiderstandsverhaltens und der Prozessierbarkeit der Kautschukmischung. Hierzu weist das Silan üblicherweise wenigstens eine Schwefelgruppierung auf, die an der Vulkanisation der Kautschukmischung beteiligt ist.

Nadasdi et al., "Synthesis, Structure, and Reactivity of Lewis Acidic Cyclopentadienyltitanium Dithiolate Complexes", Inorg. Chem. (1993), 32, 347-356 offenbart ein Silan der Formel Me₃SiSCH₂CH₂SCH₂CH₂SSiMe₃.

WO 2017/036268 A1 betrifft "polyorganic functional groups modified silica, processes to make and use thereof" und offenbart eine Vielzahl entsprechender Verbindungen.

WO 2019/001823 A1 betrifft ein Verfahren zur Herstellung eines Silans, ein Verfahren zur Modifizierung einer Kieselsäure mit dem Silan und eine modifizierte Kieselsäure, wobei das Silan die Formel (R¹)ₒSi-R²-HNC(=O)NH-A-HNC(=O)-A-Sₖ-A-C(=O)NH-A-NHC(=O)-R²-Si(R¹)ₒ aufweist.

WO 2019/001822 A1 betrifft ein Silan, eine Kautschukmischung enthaltend das Silan und einen Fahrzeugreifen, der die Kautschukmischung in wenigstens einem Bauteil aufweist, wobei das Silan die Formel (R¹)ₒSi-R²-X-A-Y-[A-Y-]ₘ-A-Sₖ-A-[-Y-A]ₘ-Y-A-X-R²-Si(R¹)ₒ aufweist.

Prinzipiell kann unterschieden werden zwischen Silanen, die nur an Kieselsäure oder vergleichbare Füllstoffe anbinden und hierzu insbesondere wenigstens eine Silyl-Gruppe aufweisen, und Silanen, die zusätzlich zu einer Silyl-Gruppe eine reaktive SchwefelGruppierung, wie insbesondere eine Sₓ-Gruppierung (mit x > oder gleich 2) oder eine Mercapto-Gruppe S-H oder geblockte S-SG-Gruppierung aufweisen, wobei SG für eine Schutzgruppe steht, sodass das Silan durch Reaktion der Sₓ- oder S-H-Gruppierung oder der S-SG-Gruppierung nach Entfernen der Schutzgruppe bei der Schwefelvulkanisation auch an Polymere anbinden kann. Das Vorhandensein von -H oder -SG kann auch durch X ausgedrückt werden.

Zudem gibt es im Stand der Technik Ansätze, die Länge der Abstandsgruppe, auch Spacer genannt, zwischen der Silyl-Gruppe und der Sₓ- oder S-X-Gruppierung zu variieren.

So offenbart die EP 1375504 B1 Silane, die innerhalb der Abstandsgruppe genau eine verlängernde Thioether-Einheit aufweist.

Der vorliegenden Erfindung liegt die Aufgabe zugrunde, ein neuartiges Silan bereitzustellen und eine Kautschukmischung mit dem Silan bereitzustellen, wodurch im Vergleich zum Stand der Technik eine weitere Verbesserung im Eigenschaftsprofil umfassend das Rollwiderstandsverhalten, das Griffverhalten (*engl.* "grip"), insbesondere Nassgriff, und die Steifigkeit und damit insbesondere die Handling-Prediktoren der Kautschukmischung, insbesondere für die Anwendung im Fahrzeugreifen, erzielt wird. Gelöst wird die Aufgabe durch das erfindungsgemäße Silan gemäß Anspruch 1, die mit dem erfindungsgemäßen Silan modifizierte Kieselsäure, die erfindungsgemäße Kautschukmischung enthaltend das Silan sowie den erfindungsgemäßen Fahrzeugreifen, der die erfindungsgemäße Kautschukmischung in wenigstens einem Bauteil aufweist. Ferner wird die Aufgabe durch das Verfahren zur Herstellung des Silans gemäß Anspruch 11 gelöst.

Das erfindungsgemäße Silan weist folgende Formel I) auf:

I) (R¹)ₒSi-R²-S-R³-S-R³-S-X ,

wobei o = 3 ist und die Reste R¹ unabhängig voneinander gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind
   oder
zwei R¹ bilden eine cyclische Dialkoxygruppe mit 2 bis 10 Kohlenstoffatomen, oder es können zwei oder mehr Silane gemäß Formel I) über Reste R¹ verbrückt sein; und
wobei R² ausgewählt ist aus der Gruppe bestehend aus linearen oder verzweigten Alkylengruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen; und wobei die Reste R³ gleich sind und lineare Alkylreste mit 4 bis 20 Kohlenstoffatomen sind; und wobei die Gruppe X ein Wasserstoffatom oder eine - C(=O)-R⁴ Gruppe oder
eine -SiR⁷₃-Gruppe ist, wobei R⁴ und R⁷ ausgewählt sind aus C₁-C₂₀-Alkylgruppen, C₄-C₁₀-Cycloalkylgruppen, C₆-C₂₀-Arylgruppen, C₂-C₂₀-Alkenylgruppen und C₇-C₂₀-Aralkylgruppen und R⁷ zusätzlich aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen ausgewählt ist; und wobei das Silan auch in Form von Oligomeren vorliegen kann, die durch Hydrolyse und Kondensation von Silanen der Formel I) entstehen.

Im Vergleich zu aus dem Stand der Technik bekannten Silanen weist das erfindungsgemäße Silan mit der Gruppe -R²-S-R³-S-R³- eine vergleichsweise lange Abstandsgruppe auf, die zwei Thioether-Einheiten umfasst. Hierdurch wird erfindungsgemäß ein neuartiges Silan bereitgestellt. Eine Kautschukmischung, die das erfindungsgemäße Silan enthält, weist ein optimiertes Eigenschaftsprofil umfassend das Rollwiderstandsverhalten und die Steifigkeit auf. Die erfindungsgemäße Kautschukmischung weist somit eine gewisse Verbesserung hinsichtlich des Eigenschaftsprofils umfassend Handling-Prediktoren auf und der erfindungsgemäße Fahrzeugreifen zeigt u. a. ein verbessertes Handling-Verhalten.

Im Folgenden werden das erfindungsgemäße Silan und dessen bevorzugte Ausführungsformen erläutert. Sämtliche Aspekte gelten auch für das Silan in der erfindungsgemäßen Kautschukmischung und im erfindungsgemäßen Fahrzeugreifen sowie für das Herstellverfahren sofern nicht ausdrücklich anders bezeichnet.

Die Begriffe "Rest" und "Gruppe" werden im Rahmen der vorliegenden Erfindung im Zusammenhang mit chemischen Formelbestandteilen synonym verwendet.

Wie in Formel I) dargestellt, handelt es sich bei dem erfindungsgemäßen Silan um ein geblocktes Mercaptosilan mit der Gruppierung S-X, wobei X aufgrund seiner näher spezifizierten Eigenschaften ein Wasserstoffatom oder eine Schutzgruppe darstellt, sodass der Schwefel dann durch Entfernen der Schutzgruppe wie eingangs beschrieben aktiviert wird, um an einer Schwefelvulkanisation teilnehmen zu können.

Die Gruppe X ist ein Wasserstoffatom oder eine -C(=O)-R⁴ Gruppe oder eine -SiR⁷₃-Gruppe, wobei R⁴ und R⁷ ausgewählt sind aus C₁-C₂₀-Alkylgruppen, C₄-C₁₀-Cycloalkylgruppen, C₆-C₂₀-Arylgruppen, C₂-C₂₀-Alkenylgruppen und C₇-C₂₀-Aralkylgruppen und R⁷ zusätzlich aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen ausgewählt ist.

Gemäß besonders vorteilhafter Ausführungsformen der Erfindung ist X eine -C(=O)-R⁴ Gruppe oder eine -SiR⁷₃-Gruppe, womit es sich bei dem erfindungsgemäßen Silan dieser vorteilhaften Ausführungsformen um ein geblocktes Mercaptosilan handelt. Dies hat den Vorteil, dass der Schwefel erst nach Entfernen der genannten Gruppen für X an chemischen Reaktionen teilnehmen kann und nicht im Vorfeld unerwünschte Nebenreaktionen auftreten. Das Silan ist damit einfacher prozessierbar, insbesondere einfacher in eine Kautschukmischung einzumischen.

Besonders bevorzugt ist die Gruppe X eine -C(=O)-R⁴ Gruppe, wobei R⁴ ausgewählt ist aus C₁-C₂₀-Alkylgruppen.

Dabei ist R⁴ ganz besonders bevorzugt ausgewählt aus C₁ bis C₇-Alkylgruppen, wiederum bevorzugt C₁-C₃-Alkylgruppen, insbesondere beispielsweise eine C₁-Alkylgruppe, also eine Methylgruppe.

Die Reste R¹ des erfindungsgemäßen Silans können innerhalb der Silylgruppe (R¹)ₒSi-unabhängig voneinander gleich oder verschieden voneinander sein und sind ausgewählt aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind
oder
zwei R¹ bilden eine cyclische Dialkoxygruppe mit 2 bis 10 Kohlenstoffatomen,
oder es können zwei oder mehr Silane gemäß Formel I) über Reste R¹ verbrückt sein. Sämtliche genannten Reste R¹ und Verknüpfungen können innerhalb einer Silyl-Gruppe miteinander kombiniert sein.

Für den Fall, dass zwei Silane gemäß Formel I) miteinander verbrückt sind, teilen sie sich einen Rest R¹. Auf diese Weise können auch mehr als zwei Silane aneinander verknüpft sein. Im Anschluss an die Synthese des Silans gemäß Formel I) ist es somit denkbar, dass zwei Silane gemäß Formel I) über die Reste R¹ miteinander verbrückt werden. Auf diese Weise können auch mehr als zwei Silane aneinander verknüpft werden, wie beispielsweise über Dialkoxygruppen.

Das erfindungsgemäße Silan kann auch Oligomere umfassen, die durch Hydrolyse und Kondensation der Silane der Formel I) entstehen. Dabei sind zum einen Oligomere von zweien oder mehreren Silanen gemäß Formel I) umfasst. Erfindungsgemäß sind zum anderen auch Oligomere umfasst, die durch Kondensation wenigstens eines Silans gemäß Formel I) mit wenigstens einem weiteren Silan, welches nicht Formel I) entspricht, entstehen. Bei dem "weiteren Silan" kann es sich insbesondere um dem Fachmann bekannte Silan-Kupplungsagenzien handeln.

Das Silan gemäß Formel I) umfasst gemäß vorteilhafter Ausführungsform, insbesondere zur Verwendung des Silans in einer kieselsäurehaltigen Kautschukmischung, in jeder Silylgruppe (R¹)ₒSi- wenigstens einen Rest R¹, der als Abgangsgruppe dienen kann, wie insbesondere Alkoxy-Gruppen oder sämtliche andere der genannten Gruppen, die mit einem Sauerstoffatom an das Siliciumatom gebunden sind, oder Halogenide.

Es ist bevorzugt, dass die Reste R¹ Alkylgruppen mit 1 bis 6 Kohlenstoffatomen oder Alkoxygruppen mit 1 bis 6 Kohlenstoffatomen oder Halogenide umfassen, besonders bevorzugt sind Alkoxygruppen mit 1 bis 6 Kohlenstoffatomen oder Halogenide.

Gemäß einer besonders vorteilhaften Ausführungsform der Erfindung sind die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, wobei o = 3 ist.

Aber auch bei Oligomeren oder im Fall, dass zwei R¹ eine Dialkoxy-Gruppe bilden, sind die übrigen Reste R¹ bevorzugt Alkylgruppen mit 1 bis 6 Kohlenstoffatomen oder Halogenide oder Alkoxygruppen mit 1 bis 6 Kohlenstoffatomen, bevorzugt 1 oder 2 Kohlenstoffatomen, also Methoxygruppen oder Ethoxygruppen, ganz besonders bevorzugt Ethoxygruppen.

Der Rest R² des erfindungsgemäßen Silans ist ausgewählt aus der Gruppe bestehend aus linearen oder verzweigten Alkylengruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen.

Die Reste R³ sind gleich und lineare Alkylenreste mit 4 bis 20 Kohlenstoffatomen, bevorzugt 4 bis 10 Kohlenstoffatomen, besonders bevorzugt 4 bis 8 Kohlenstoffatomen, insbesondere beispielsweise 6 Kohlenstoffatomen.

Es ist bevorzugt, dass der Rest R² eine lineare oder verzweigte Alkylengruppe mit 2 bis 8 Kohlenstoffatomen oder Cycloalkylgruppe mit 4 bis 8 Kohlenstoffatomen, wie insbesondere Cyclohexylrest, ist.

Gemäß einer besonders vorteilhaften Ausführungsform der Erfindung ist R² eine lineare oder verzweigte Alkylengruppe mit 2 bis 8 Kohlenstoffatomen, bevorzugt mit 2 bis 6 Kohlenstoffatomen, besonders bevorzugt mit 2 bis 4 Kohlenstoffatomen, insbesondere bevorzugt 2 oder 3 Kohlenstoffatome, wobei Propylenreste mit 3 Kohlenstoffatomen beispielsweise ganz besonders bevorzugt sind.

In einer besonders bevorzugten und beispielhaften Ausführungsform der Erfindung weist das erfindungsgemäße Silan die folgende Formel II) auf:

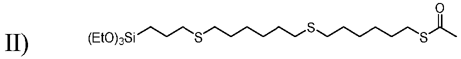

Hierbei sind im Hinblick auf Formel I) o gleich 3, alle R¹ Ethoxygruppen, R² ein Propylenrest, X eine -C(=O)-R⁴ mit R⁴ gleich Methyl, und die Reste R³ Hexylengruppen.

Das Silan gemäß Formel II) stellt ein bevorzugtes erfindungsgemäßes Beispiel dar. Hiermit wird ein besonders gutes Eigenschaftsprofil zur Lösung der technischen Aufgabe erzielt.

Ein weiterer Gegenstand der vorliegenden Erfindung ist ein Verfahren zur Herstellung des erfindungsgemäßen Silans gemäß Formel I). Das erfindungsgemäße Verfahren umfasst wenigstens die folgenden Verfahrensschritte:
a) Bereitstellung einer Substanz (R¹)ₒSi-R²-SH ;
b) Bereitstellung einer Substanz Cl-R³-Cl ;
c) Umsetzung der Substanz aus Schritt a) mit der Substanz aus Schritt b) unter Anwesenheit einer Base zu (R¹)ₒSi-R²-S-R³-Cl;
d) Umsetzung von (R¹)ₒSi-R²-S-R³-Cl aus Schritt c) mit einem metallischen Hydrogensulfid (M-S-H) zu (R¹)ₒSi-R²-S-R³-SH, wobei M für Metall steht;
e) Umsetzung von (R¹)ₒSi-R²-S-R³-SH aus Schritt d) mit einer weiteren Portion von Cl-R³-Cl zu (R¹)ₒSi-R²-S-R³-S-R³-Cl;
f) Bereitstellung einer Substanz M-S-X, wobei X wie in Anspruch 1 definiert ist, und M für Metall steht;
g) Umsetzung von (R¹)ₒSi-R²-S-R³-S-R³-Cl mit M-S-X zu dem Silan gemäß Formel I): (R¹)ₒSi-R²-S-R³-S-R³-S-X;
h) Optional Aufreinigung des in Schritt g) erhaltenen Silans gemäß Formel I),
wobei die beiden M gemäß Schritt d) und f) unabhängig voneinander gleich oder verschieden sein können.

Für die Reste R¹, R², R³ und o sowie X gelten die obigen Ausführungen sofern nicht ausdrücklich anders angegeben.

Die Substanzen gemäß Schritt a) und b) können kommerziell erworben und bereitgestellt werden.

Die Umsetzung gemäß Schritt c) erfolgt bevorzugt in einem organischen Lösungsmittel, wie beispielsweise Ethanol, insbesondere für den Fall, dass wenigstens ein Rest R¹ Ethoxy ist, oder Methanol, insbesondere für den Fall, dass wenigstens ein Rest R¹ Methoxy ist.

Bevorzugt findet die Reaktion gemäß Schritt c) unter Schutzgasatmosphäre, wie beispielsweise unter Argon, und bei erhöhter Temperatur, wie beispielsweise 60 bis 90 °C, statt.

Bevorzugt wird zunächst (R¹)ₒSi-R²-SH (z. B. 3-(Mercaptopropyl)-triethoxysilan) mit der Base, wie insbesondere Natriumethanolat, insbesondere für wenigstens ein R¹ gleich Ethoxy, in Kontakt gebracht und die Deprotonierung am Schwefelatom, insbesondere durch Erhitzen auf über mehrere Stunden, beispielsweise 1 bis 12 Stunden, herbeigeführt.

Nach erfolgter vollständiger Deprotonierung kann auf Raumtemperatur (RT) abgekühlt werden und die abgekühlte ethanolische Lösung des nach der Deprotonierung erhaltenen Thiolates wird dann zu Cl-R³-Cl (z. B. 1,6-Dichlorhexan) getropft und über mehrere Stunden, beispielsweise 2 bis 12 Stunden, bei erhöhter Temperatur, wie beispielsweise 60 bis 90 °C gerührt.

Das entstehende Reaktionsprodukt (R¹)ₒSi-R²-S-R³-Cl gemäß Schritt c) wird je nach Aggregatzustand isoliert und anschließend aufgereinigt.

Gemäß Schritt d) erfolgt die Umsetzung von (R¹)ₒSi-R²-S-R³-Cl aus Schritt c) mit M-S-H, beispielsweise und bevorzugt Natriumhydrogensulfid (NaSH) zu (R¹)ₒSi-R²-S-R³-SH. Das Hydrogensulfid, wie Natriumhydrogensulfid, ist insbesondere wasserfrei.

Die Reaktion findet bevorzugt in einem polaren, aprotischen, organischen Lösungsmittel, wie beispielsweise Dimethylformamid (DMF), und unter Erhitzen, beispielsweise auf 50 bis 70 °C, über mehrere Stunden, beispielsweise 2 bis 12 Stunden, statt.

Nach dem Abkühlen wird das Lösungsmittel entfernt und das Reaktionsprodukt (R¹)ₒSi-R²-S-R³-SH beispielsweise mittels Ethylacetat extrahiert und aufgereinigt.

Gemäß Schritt e) erfolgt die Umsetzung von (R¹)ₒSi-R²-S-R³-SH aus Schritt d) mit einer weiteren Portion von Cl-R³-Cl zu (R¹)ₒSi-R²-S-R³-S-R³-Cl.

Hier gelten die Reaktionsbedingungen wie zu Schritt c) beschrieben analog.

Das Reaktionsprodukt (R¹)ₒSi-R²-S-R³-S-R³-Cl wird isoliert und aufgereinigt.

Gemäß Schritt f) wird eine Substanz M-S-X bereitgestellt, wobei X wie in Anspruch 1 definiert ist, und M für Metall steht, wobei das Metall unabhängig von dem Metall aus Schritt d) gewählt ist. Beispielsweise und gemäß einer bevorzugten Ausführungsform wird in Schritt f) K-S-X verwendet, wobei K für Kalium steht.

Eine Beispielsubstanz ist Kaliumthioacetat, welche kommerziell erhältlich ist und damit bereitgestellt wird.

Gemäß Schritt g) erfolgt die Umsetzung von (R¹)ₒSi-R²-S-R³-S-R³-Cl mit K-S-X zu dem Silan gemäß Formel I): (R¹)ₒSi-R²-S-R³-S-R³-S-X.

Die Reaktion findet bevorzugt in einem polaren, aprotischen, organischen Lösungsmittel, wie beispielsweise Dimethylformamid (DMF), und unter Erhitzen, beispielsweise auf 40 bis 60 °C, über mehrere Stunden, beispielsweise 2 bis 12 Stunden, statt.

Nach dem Abkühlen wird das Lösungsmittel entfernt und das Reaktionsprodukt gemäß Formel I):

I) (R¹)ₒSi-R²-S-R³-S-R³-S-X

beispielsweise mittels Ethylacetat extrahiert und aufgereinigt.

Gemäß Verfahrensschritt h) erfolgt optional die Aufreinigung des in Schritt g) erhaltenen Silans gemäß Formel I), wobei sich die Art der Aufreinigung danach bestimmt, in welchem Aggregatzustand das Silan anfällt.

Es ist aber auch denkbar, das hergestellte Silan ohne einen Aufreinigungsschritt weiter zu verwenden, wie beispielsweise auf Kieselsäure aufzuziehen, wie unten beschrieben.

Ein weiterer Gegenstand der vorliegenden Erfindung ist eine Kieselsäure, die mit wenigstens einem erfindungsgemäßen Silan zumindest an deren Oberfläche modifiziert ist. Beispielsweise erfolgt die Modifizierung durch wenigstens folgende Verfahrensschritte:
i) Optional Lösen des erfindungsgemäßen Silans gemäß Formel I) aus Schritt g) oder h) in einem organischen Lösungsmittel;
j) Inkontaktbringen wenigstens einer Kieselsäure mit dem Silan aus Schritt g) oder h) oder der Lösung aus Schritt i) und anschließendes Rühren der entstandenen Suspension, bevorzugt für 30 Minuten bis 18 Stunden;
k) Trocknen der erhaltenen modifizierten Kieselsäure.

Bei der Kieselsäure kann es sich um jegliche dem Fachmann bekannte Kieselsäure handeln, wie insbesondere die unten näher aufgeführten Kieselsäuretypen. Diese weiteren Verfahrensschritte stellen eine Modifizierung von Kieselsäure mit dem erfindungsgemäß hergestellten Silan dar und sind ein weiterer Aspekt der vorliegenden Erfindung.

Die erfindungsgemäße Kautschukmischung enthält wenigstens ein erfindungsgemäßes Silan gemäß Formel I). Es ist prinzipiell denkbar, dass die Kautschukmischung mehrere erfindungsgemäße Silane unterschiedlicher Ausführungsformen, also mit ggf. unterschiedlichen Gruppen X, sowie R¹, R² und R³ im Gemisch enthält. Insbesondere kann die Kautschukmischung auch ein Gemisch zweier oder mehrerer Silane I) oder II) enthalten. Die Kautschukmischung kann das erfindungsgemäße Silan gemäß den gezeigten Formeln I) oder II) auch in Kombination mit anderen im Stand der Technik bekannten Silanen enthalten, ggf. als Oligomere, wie oben beschrieben.

Solche aus dem Stand der Technik bekannten Kupplungsagenzien sind insbesondere und beispielsweise bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln:
-SCN, -SH, -NH₂ oder -Sx- (mit x = 2 bis 8).

So können als Silan-Kupplungsagenzien z. B. 3-Mercaptopropyltriethoxysilan, 3-Thiocyanato-propyltrimethoxysilan oder 3,3'-Bis(triethoxysilylpropyl)polysulfide mit 2 bis 8 Schwefelatomen, wie z. B. 3,3'-Bis(triethoxysilylpropyl)tetrasulfid (TESPT), das entsprechende Disulfid (TESPD) oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S^{®} der Firma Evonik) zugesetzt werden.

Im Stand der Technik bekannt ist auch ein Silan-Gemisch, welches zu 40 bis 100 Gew.-% Disulfide, besonders bevorzugt 55 bis 85 Gew.-% Disulfide und ganz besonders bevorzugt 60 bis 80 Gew.-% Disulfide enthält. Ein solches Gemisch ist z.B. unter dem Handelsnamen Si 266^{®} der Firma Evonik erhältlich, welches z.B. in der DE 102006004062 A1 beschrieben ist.

Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT (z.B. 3-(Octanoylthio)-1-Propyl-Triethoxysilan) in verschiedenen Varianten von der Firma Momentive, USA, oder solche, die unter dem Namen VP Si 363^{®} von der Firma Evonik Industries vertrieben werden.

Auch eingangs genannte Silane mit genau einer Thioether-Einheit in der Abstandsgruppe können zusätzlich vorhanden sein.

Gemäß einer besonders vorteilhaften Ausführungsform der Erfindung enthält die Kautschukmischung das Silan gemäß Formel II).

Bei der erfindungsgemäßen Kautschukmischung handelt es sich bevorzugt um eine Kautschukmischung, die für den Einsatz in Fahrzeugreifen geeignet ist und hierzu bevorzugt wenigstens einen Dienkautschuk enthält.

Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Der Dienkautschuk ist dabei ausgewählt aus der Gruppe bestehend aus natürlichem Polyisopren und/oder synthetischem Polyisopren und/oder epoxidiertem Polyisopren und/oder Butadien-Kautschuk und/oder Butadien-Isopren-Kautschuk und/oder lösungspolymerisiertem Styrol-Butadien-Kautschuk und/oder emulsionspolymerisiertem Styrol-Butadien-Kautschuk und/oder Styrol-Isopren-Kautschuk und/oder Flüssigkautschuken mit einem Molekulargewicht M_{w} von größer als 20000 g/mol und/oder Halobutyl-Kautschuk und/oder Polynorbornen und/oder Isopren-Isobutylen-Copolymer und/oder Ethylen-Propylen-Dien-Kautschuk und/oder Nitril-Kautschuk und/oder Chloropren-Kautschuk und/oder Acrylat-Kautschuk und/oder Fluor-Kautschuk und/oder Silikon-Kautschuk und/oder Polysulfid-Kautschuk und/oder Epichlorhydrin-Kautschuk und/oder Styrol-Isopren-Butadien-Terpolymer und/oder hydriertem AcrylnitrilbutadienKautschuk und/oder hydriertem Styrol-Butadien-Kautschuk.

Insbesondere Nitrilkautschuk, hydrierter Acrylnitrilbutadienkautschuk, Chloroprenkautschuk, Butylkautschuk, Halobutylkautschuk oder Ethylen-Propylen-Dien-Kautschuk kommen bei der Herstellung von technischen Gummiartikeln, wie Gurte, Riemen und Schläuche, und/oder Schuhsohlen zum Einsatz.

Vorzugsweise ist der Dienkautschuk ausgewählt aus der Gruppe, bestehend aus natürlichem Polyisopren und/oder synthetischem Polyisopren und/oder Butadien-Kautschuk und/oder lösungspolymerisiertem Styrol-Butadien-Kautschuk und/oder emulsionspolymerisiertem Styrol-Butadien-Kautschuk.

Gemäß einer bevorzugten Weiterbildung der Erfindung werden in der Kautschukmischung wenigstens zwei verschiedene Dienkautschuk-Typen eingesetzt.

Die erfindungsgemäße Kautschukmischung enthält als Füllstoff bevorzugt wenigstens eine Kieselsäure, wodurch die Vorteile des erfindungsgemäßen Silans besonders hervortreten.

Wird das wenigstens eine erfindungsgemäße Silan der erfindungsgemäßen Kautschukmischung auf einer Kieselsäure aufgezogen zugegeben, so kann die Kautschukmischung weitere Kieselsäuren enthalten.

Die Begriffe "Kieselsäure" und "Silika" werden im Rahmen der vorliegenden Erfindung synonym verwendet.

Bei den Kieselsäuren kann es sich um die dem Fachmann bekannten Kieselsäuren, die als Füllstoff für Reifenkautschukmischungen geeignet sind, handeln. Besonders bevorzugt ist es allerdings, wenn eine fein verteilte, gefällte Kieselsäure verwendet wird, die eine Stickstoff-Oberfläche (BET-Oberfläche) (gemäß DIN ISO 9277 und DIN 66132) von 35 bis 400 m²/g, bevorzugt von 35 bis 350 m²/g, besonders bevorzugt von 100 bis 320 m²/g und ganz besonders bevorzugt von 100 bis 235 m²/g, und eine CTAB-Oberfläche (gemäß ASTM D 3765) von 30 bis 400 m²/g, bevorzugt von 30 bis 330 m²/g, besonders bevorzugt von 95 bis 300 m²/g und ganz besonders bevorzugt von 95 bis 200 m²/g, aufweist. Derartige Kieselsäuren führen z. B. in Kautschukmischungen für innere Reifenbauteile zu besonders guten physikalischen Eigenschaften der Vulkanisate. Außerdem können sich dabei Vorteile in der Mischungsverarbeitung durch eine Verringerung der Mischzeit bei gleichbleibenden Produkteigenschaften ergeben, die zu einer verbesserten Produktivität führen. Als Kieselsäuren können somit z. B. sowohl jene des Typs Ultrasil^{®} VN3 (Handelsname) der Firma Evonik als auch Kieselsäuren mit einer vergleichsweise niedrigen BET-Oberfläche (wie z. B. Zeosil^{®} 1115 oder Zeosil^{®} 1085 der Firma Solvay) als auch hoch dispergierbare Kieselsäuren, so genannte HD-Kieselsäuren (z. B. Zeosil^{®} 1165 MP der Firma Solvay).

Die Menge der wenigstens einen Kieselsäure beträgt dabei bevorzugt 5 bis 300 phr, besonders bevorzugt 10 bis 200 phr, ganz besonders bevorzugt 20 bis 180 phr. Im Falle unterschiedlicher Kieselsäuren ist mit den angegebenen Mengen die Gesamtmenge an enthaltenen Kieselsäuren gemeint.

Die in dieser Schrift verwendete Angabe phr (parts per hundred parts of rubber by weight) ist die in der Kautschukindustrie übliche Mengenangabe für Mischungsrezepturen. Die Dosierung der Gewichtsteile der einzelnen Substanzen wird in dieser Schrift auf 100 Gewichtsteile der gesamten Masse aller in der Mischung vorhandenen hochmolekularen (Mw größer als 20.000 g/mol) und dadurch festen Kautschuke bezogen.

Die in dieser Schrift verwendete Angabe phf (parts per hundred parts of filler by weight) ist die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Silanmenge mit eingehen.

Bevorzugt enthält die erfindungsgemäße Kautschukmischung wenigstens ein Silan der Formel I), bevorzugt wenigstens das Silan gemäß Formel II) in einer Menge von 1 bis 25 phr und im bevorzugten Fall mit Kieselsäure als Füllstoff bevorzugt 2 bis 20 phf.

Das oder die erfindungsgemäßen Silane werden bei der Herstellung der erfindungsgemäßen Kautschukmischung bevorzugt in wenigstens einer Grundmischstufe zugegeben, die bevorzugt wenigstens einen Dienkautschuk und bevorzugt wenigstens eine Kieselsäure als Füllstoff enthält.

Ein weiterer Gegenstand der vorliegenden Erfindung ist somit ein Verfahren zur Herstellung der erfindungsgemäßen Kautschukmischung, wobei wenigstens ein erfindungsgemäßes Silan wie vorstehend beschrieben bevorzugt in wenigstens einer Grundmischstufe zugegeben wird.

Gemäß einer vorteilhaften Ausführungsform der Erfindung wird das wenigstens eine erfindungsgemäße Silan zuvor auf Kieselsäure aufgezogen und in dieser Form in die Kautschukmischung eingemischt.

Bei dem erfindungsgemäßen Verfahren zur Herstellung der erfindungsgemäßen Kautschukmischung ist es somit bevorzugt, wenn das wenigstens eine erfindungsgemäße Silan zuvor auf Kieselsäure aufgezogen und in dieser Form in die Kautschukmischung eingemischt wird.

Die Kautschukgrundmischung enthaltend wenigstens ein erfindungsgemäßes Silan und/oder eine erfindungsgemäße Kieselsäure wird anschließend durch Zugabe von Vulkanisationschemikalien, s. unten insbesondere ein Schwefelvulkanisationssystem, zu einer Kautschukfertigmischung verarbeitet und im Anschluss vulkanisiert, wodurch ein erfindungsgemäßes Vulkanisat der erfindungsgemäßen Kautschukmischung erhalten wird.

Weitere Aspekte der vorliegenden Erfindung sind die Herstellung einer Kautschukgrundmischung enthaltend wenigstens ein erfindungsgemäßes Silan und/oder eine erfindungsgemäße Kieselsäure, sowie die Herstellung einer Kautschukfertigmischung enthaltend wenigstens ein erfindungsgemäßes Silan und/oder eine erfindungsgemäße Kieselsäure, sowie die Herstellung eines erfindungsgemäßen Vulkanisates der erfindungsgemäßen Kautschukmischung.

Die erfindungsgemäße Kautschukmischung kann Ruß als weiteren Füllstoff enthalten, und zwar bevorzugt in Mengen von 2 bis 200 phr, besonders bevorzugt 2 bis 70 phr.

Die erfindungsgemäße Kautschukmischung kann, bevorzugt möglichst geringe Mengen d.h. bevorzugt 0 bis 3 phr, weitere Füllstoffe enthalten. Zu den weiteren (nicht verstärkenden) Füllstoffen zählen im Rahmen der vorliegenden Erfindung Alumosilicate, Kaolin, Kreide, Stärke, Magnesiumoxid, Titandioxid oder Kautschukgele sowie Fasern (wie zum Beispiel Aramidfasern, Glasfasern, Carbonfasern, Cellulosefasern).

Weitere ggf. verstärkende Füllstoffe sind z.B. Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen), Graphit und Graphene und sogenannte "carbon-silica dual-phase filler".

Zinkoxid gehört im Rahmen der vorliegenden Erfindung nicht zu den Füllstoffen.

Des Weiteren kann die Kautschukmischung übliche Zusatzstoffe in üblichen Gewichtsteilen enthalten, die bei deren Herstellung bevorzugt in wenigstens einer Grundmischstufe zugegeben werden. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ),
b) Aktivatoren, wie z. B. Zinkoxid und Fettsäuren (z. B. Stearinsäure) und/oder sonstige Aktivatoren, wie Zinkkomplexe wie z.B. Zinkethylhexanoat,
c) Ozonschutzwachse,
d) Harze, insbesondere Klebharze für innere Reifenbauteile,
e) Mastikationshilfsmittel, wie z. B. 2,2'-Dibenzamidodiphenyldisulfid (DBD) und
f) Prozesshilfsmittel, wie insbesondere Fettsäureester und Metallseifen, wie z.B. Zinkseifen und/oder Calciumseifen
g) Weichmacher, wie insbesondere wie aromatische, naphthenische oder paraffinische Mineralölweichmacher, wie z.B. MES (mild extraction solvate) oder RAE (Residual Aromatic Extract) oder TDAE (treated distillate aromatic extract), oder Rubber-to-Liquid-Öle (RTL) oder Biomass-to-Liquid-Öle (BTL) bevorzugt mit einem Gehalt an polycyclischen Aromaten von weniger als 3 Gew.-% gemäß Methode IP 346 oder Triglyceride, wie z. B. Rapsöl, oder Faktisse oder Kohlenwasserstoffharze oder Flüssig-Polymere, deren mittleres Molekulargewicht (Bestimmung per GPC = gel permeation chromatography, in Anlehnung an BS ISO 11344:2004) zwischen 500 und 20000 g/mol liegt, wobei Mineralöle als Weichmacher besonders bevorzugt sind.

Bei der Verwendung von Mineralöl ist dieses bevorzugt ausgewählt aus der Gruppe, bestehend aus DAE (Destillated Aromatic Extracts) und/oder RAE (Residual Aromatic Extract) und/oder TDAE (Treated Destillated Aromatic Extracts) und/oder MES (Mild Extracted Solvents) und/oder naphthenische Öle.

Der Mengenanteil der Gesamtmenge an weiteren Zusatzstoffen beträgt bevorzugt 3 bis 150 phr, besonders bevorzugt 3 bis 100 phr und ganz besonders bevorzugt 5 bis 80 phr.

Im Gesamtmengenanteil der weiteren Zusatzstoffe kann Zinkoxid (ZnO) in den oben genannten Mengen enthalten sein.

Hierbei kann es sich um alle dem Fachmann bekannten Typen an Zinkoxid handeln, wie z.B. ZnO-Granulat oder -Pulver. Das herkömmlicherweise verwendete Zinkoxid weist in der Regel eine BET-Oberfläche von weniger als 10 m²/g auf. Es kann aber auch ein Zinkoxid mit einer BET-Oberfläche von 10 bis 100 m²/g, wie z.B. so genannte "nano-Zinkoxide", verwendet werden.

Die Vulkanisation der erfindungsgemäßen Kautschukmischung wird bevorzugt in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigern und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS) oder eines Guanidin-Beschleunigers wie Diphenylguanidin (DPG).

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe enthaltend z.B. Thiuramdisulfide, wie z.B. Tetrabenzylthiuramdisulfid (TBzTD) und/oder Tetramethylthiuramdisulfid (TMTD) und/oder Tetraethylthiuramdisulfid (TETD), und/oder Thiuramtetrasulfide, wie z.B. Dipentamethylenthiuramtetrasulfid (DPTT), und/oder Dithiophosphate, wie z.B.

DipDis (Bis-(Diisopropyl)thiophosphoryldisulfid) und/oder Bis(O,O-2-ethylhexyl-thiophosphoryl)Polysulfid (z. B. Rhenocure SDT 50^{®}, Rheinchemie GmbH) und/oder Zinkdichloryldithiophosphat (z. B. Rhenocure ZDT/S^{®}, Rheinchemie GmbH) und/oder Zinkalkyldithiophosphat, und/oder 1,6-Bis(N,N-dibenzylthiocarbamoyldithio)hexan und/oder Diarylpolysulfide und/oder Dialkylpolysulfide.

Auch weitere netzwerkbildende Systeme, wie sie beispielsweise unter den Handelsnamen Vulkuren^{®}, Duralink^{®} oder Perkalink^{®} erhältlich sind, oder netzwerkbildende Systeme, wie sie in der WO 2010/049216 A2 beschrieben sind, können in der Kautschukmischung eingesetzt werden. Dieses System enthält ein Vulkanisationsmittel, welches mit einer Funktionalität größer vier vernetzt und zumindest einen Vulkanisationsbeschleuniger.

Besonders bevorzugt ist die Verwendung der Beschleuniger TBBS und/oder CBS und/oder Diphenylguanidin (DPG).

Außerdem können in der Kautschukmischung Vulkanisationsverzögerer vorhanden sein.

Die Begriffe "vulkanisiert" und "vernetzt" werden im Rahmen der vorliegenden Erfindung synonym verwendet.

Gemäß einer bevorzugten Weiterbildung der Erfindung werden bei der Herstellung der schwefelvernetzbaren Kautschukmischung mehrere Beschleuniger in der Fertigmischstufe zugegeben.

Die Herstellung der erfindungsgemäßen schwefelvernetzbaren Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang oder Kalandrieren weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die oben beschriebene erfindungsgemäße Kautschukmischung ist besonders für die Verwendung in Fahrzeugreifen, insbesondere Fahrzeugluftreifen geeignet. Hierbei ist die Anwendung in allen Reifenbauteilen prinzipiell denkbar, insbesondere in einem Laufstreifen, insbesondere in der Cap eines Laufstreifens mit Cap/Base-Konstruktion. Die Cap ist hierbei der Teil des Laufstreifens des Fahrzeugreifens, der mit der Fahrbahn in Berührung kommt, während die Base der radial darunter befindliche innere Teil des Laufstreifens ist, der nicht mit der Fahrbahn in Berührung kommt.

Zur Verwendung in Fahrzeugreifen wird die Mischung als Fertigmischung vor der Vulkanisation bevorzugt in die Form eines Laufstreifens gebracht und bei der Herstellung des Fahrzeugreifenrohlings wie bekannt aufgebracht.

Die Herstellung der erfindungsgemäßen Kautschukmischung zur Verwendung als Seitenwand oder sonstige Body- Mischung in Fahrzeugreifen erfolgt wie bereits beschrieben. Der Unterschied liegt in der Formgebung nach dem Extrusionsvorgang bzw. dem Kalandrieren der Mischung. Die so erhaltenen Formen der noch unvulkanisierten Kautschukmischung für eine oder mehrere unterschiedliche Body-Mischungen dienen dann dem Aufbau eines Reifenrohlings.

Als Body-Mischung werden hierbei die Kautschukmischungen für die inneren Bauteile eines Reifen bezeichnet, wie im Wesentlichen Squeegee, Innenseele (Innenschicht), Kernprofil, Gürtel, Schulter, Gürtelprofil, Karkasse, Wulstverstärker, Wulstprofil, Hornprofil und Bandage. Der noch unvulkanisierte Reifenrohling wird anschließend vulkanisiert.

Zur Verwendung der erfindungsgemäßen Kautschukmischung in Riemen und Gurten, insbesondere in Fördergurten, wird die extrudierte noch unvulkanisierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und/oder mehrerer Lagen Kautschukmischung, einer und/oder mehrerer Lagen gleicher und/oder verschiedener Festigkeitsträger und einer und/oder mehreren weiteren Lagen dergleichen und/oder einer anderen Kautschukmischung.

Ein weiterer Gegenstand der vorliegenden Erfindung ist ein Fahrzeugreifen, der die erfindungsgemäße Kautschukmischung enthaltend wenigstens ein erfindungsgemäßes Silan in wenigstens einem Bauteil aufweist.

Der vulkanisierte Fahrzeugreifen weist wenigstens in einem Bauteil ein Vulkanisat wenigstens einer erfindungsgemäßen Kautschukmischung auf. Dem Fachmann ist bekannt, dass die meisten Substanzen, wie z. B. die enthaltenen Kautschuke und Silane, insbesondere das erfindungsgemäße Silan, entweder bereits nach dem Mischen oder erst nach der Vulkanisation in chemisch veränderter Form vorliegen.

Unter Fahrzeugreifen werden im Rahmen der vorliegenden Erfindung Fahrzeugluftreifen und Vollgummireifen, inklusive Reifen für Industrie- und Baustellenfahrzeuge, LKW-, PKW- sowie Zweiradreifen verstanden.

Bevorzugt weist der erfindungsgemäße Fahrzeugreifen die erfindungsgemäße Kautschukmischung wenigstens im Laufstreifen auf.

Bevorzugt weist der erfindungsgemäße Fahrzeugreifen die erfindungsgemäße Kautschukmischung wenigstens in der Seitenwand auf.

Die erfindungsgemäße Kautschukmischung ist ferner auch für andere Bauteile von Fahrzeugreifen geeignet, wie z. B. insbesondere dem, Hornprofil, sowie innere Reifenbauteile. Die erfindungsgemäße Kautschukmischung ist ferner auch für andere technische Gummiartikel, wie Bälge, Förderbänder, Luftfedern, Gurte, Riemen oder Schläuche, sowie Schuhsohlen geeignet.

Im Folgenden soll die Erfindung anhand von Ausführungsbeispielen näher erläutert werden. Das Silan gemäß Formel II) als erfindungsgemäßes Beispiel wurde auf folgende Weise hergestellt:

### 1. Herstellung von (3-((6-chlorohexyl)thio)propyl)-triethoxysilan;

### (EtO)₃Si(CH₂)₃S(CH₂)₆Cl nach dem Syntheseschema gemäß Formel III)

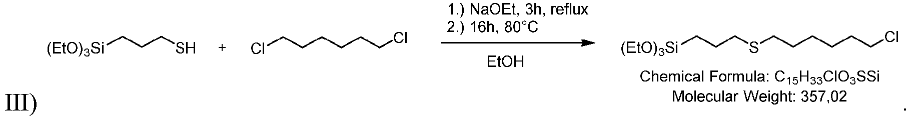

Zu einer Lösung von Natriumethanolat (12.84 g, 189.0 mmol, 1.0 Äq.) in Ethanol (60 mL) wurde bei 60 °C unter Argonatmosphäre tropfenweise über 5 min. 3-(Mercaptopropyl)-triethoxysilan (45.6 mL, 45.00 g, 189.0 mmol, 1.0 Äquivalent (Äq.).) gegeben. Anschließend wurde das orange Reaktionsgemisch für 3 h unter Reflux erhitzt, um die Deprotonierung zu vervollständigen, und dann wieder auf Raumtemperatur (RT) abkühlen gelassen. Die ethanolische Lösung des Thiolats wurde in einen Tropftrichter überführt und zu 1,6-Dichlorhexan (110.0 mL, 117.0 g, 755.0 mmol, 4.0 Äq.) bei 80 °C über 30 min. zugetropft. Die entstandene Suspension wurde anschließend bei 80 °C über Nacht gerührt. Der entstandene weiße Feststoff (NaCl) wurde mittels Büchnertrichter abfiltriert und das Zielmolekül wurde mittels fraktionierter Destillation aufgereinigt. Die Zielverbindung wurde als zweite Fraktion (bei ca. 140 °C, 0.3 mbar) in Form einer leicht gelben Flüssigkeit (34.3 g, 96.0 mmol, 51 %) isoliert.

¹H-NMR (*engl.* "nuclear magnetic resonance") (500 MHz, DMSO-*d₆*) δ 3.75 (q, *J* = 7.0 Hz, 6 H, -SiOCH₂CH₃), 3.62 (t, *J* = 6.6 Hz, 2 H, -CH₂Cl), 2.47 (dd, *J* = 14.9, 7.5 Hz, 4 H, -SCH₂-), 1.71 (dq, *J* = 8.0, 6.6 Hz, 2 H, -SiCH₂CH₂CH₂-), 1.62 - 1.49 (m, 4 H, -CH₂-), 1.42 - 1.33 (m, 4 H, -CH₂-), 1.15 (t, *J* = 7.0 Hz, 9 H, -SiOCH₂CH₃), 0.70 - 0.64 (m, 2 H, -SiCH₂CH₂CH₂-).

¹³C-NMR (126 MHz, DMSO-*d₆*) δ 57.72, 45.34, 34.03, 31.98, 30.85, 29.11, 27.47, 25.90, 18.23, 9.24.

ESI-MS (Elektrosprayionisation Massenspektrometrie) *m*/*z* (%): 311.13 [M+H-EtOH]⁺ (100).

### 2. Herstellung von (3-((6-mercaptohexyl)thio)propyl)-triethoxysilan;

### (EtO)₃Si(CH₂)₃S(CH₂)₆SH nach dem Syntheseschema gemäß Formel IV)

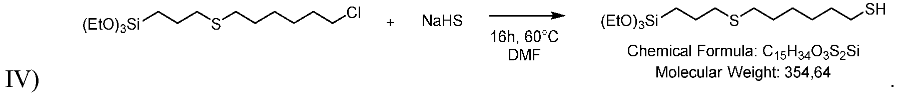

Zu einer Lösung von wasserfreiem Natriumhydrogensulfid (NaHS) (3.77 g, 67.2 mmol, 1.2 Äq.) in Dimethylformamid (DMF) (40 mL) wurde bei 60 °C unter Argonatmosphäre (3-((6-chlorohexyl)thio)propyl)-triethoxysilan (20.00 g, 56.0 mmol, 1.0 Äq.) über einen Zeitraum von 10 min. getropft. Die entstandene Suspension wurde anschließend über Nacht bei 60 °C gerührt.

Nach Abkühlen auf RT wurde das Lösungsmittel unter vermindertem Druck entfernt, der Rückstand wurde in dem. Wasser (50 mL) aufgenommen und mit Ethylacetat (3 x 50 mL) extrahiert. Die vereinigten organischen Phasen wurden mit dem Wasser (50 mL) gewaschen, über Natriumsulfat getrocknet und das Lösungsmittel wurde unter vermindertem Druck entfernt.

Nach säulenchromatographischer Aufreinigung an Kieselgel (120 g, Cyclohexan/Ethylacetat 0 % → 5 %) konnte die Zielverbindung als farblose Flüssigkeit (11.15 g, 31.4 mmol, 56 %) isoliert werden.

¹H-NMR (500 MHz, DMSO-*d₆*) δ 3.74 (q, *J* = 7.0 Hz, 6 H, -SiOCH₂CH₃), 2.49 - 2.43 (m, 6 H, -SCH₂-), 2.19 (t, *J* = 7.7 Hz, 1 H, -SH), 1.60 - 1.46 (m, 6 H, -CH₂-), 1.36 - 1.29 (m, 4 H, -CH₂-), 1.15 (t, *J* = 7.0 Hz, 9 H, -SiOCH₂CH₃), 0.69 - 0.63 (m, 2 H, -SiCH₂CH₂CH₂-).

¹³C-NMR (126 MHz, Chloroform-*d*) δ 58.48, 35.25, 33.98, 31.94, 29.65, 28.42, 28.06, 24.67, 23.32, 18.42, 9.99.

ESI-MS *m*/*z* (%): 309.14 [M+H-EtOH]⁺ (100).

### 3. Herstellung von 1-(1-Thio-3-(triethoxysilyl)propyl)-6-(1-thio-6-chlorohexyl)-hexan;

### (EtO)₃Si(CH₂)₃S(CH₂)₆S(CH₂)₆Cl nach dem Syntheseschema gemäß Formel V)

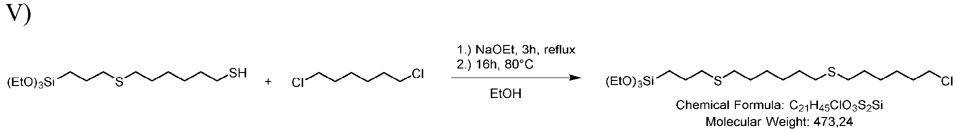

Zu einer Lösung von Natriumethanolat (0.77 g, 11.3 mmol, 1.0 Äq.) in Ethanol (40 mL) wurde bei 60 °C unter Argonatmosphäre (3-((6-mercaptohexyl)thio)propyl)-triethoxysilan (4.00 g, 11.3 mmol, 1.0 Äq.) gegeben. Anschließend wurde das Reaktionsgemisch für 3 h bei 80 °C erhitzt, um die Deprotonierung zu vervollständigen, und dann wieder auf RT abkühlen gelassen.

Die ethanolische Lösung des Thiolats wurde in einen Tropftrichter überführt und zu 1,6-Dichlorhexan (19.7 mL, 20.99 g, 135.0 mmol, 12.0 Äq.) bei 80 °C über 15 min. zugetropft. Die entstandene Suspension wurde anschließend bei 80 °C über Nacht gerührt.

Der entstandene weiße Feststoff (NaCl) wurde mittels Büchnertrichter abfiltriert, Lösungsmittel und überschüssiges 1,6-Dichlorhexan wurden unter vermindertem Druck entfernt

Nach säulenchromatographischer Aufreinigung an Kieselgel (80 g, Cyclohexan/Ethylacetat 0 % → 5 %) konnte die Zielverbindung als farbloses Öl (2.30 g, 4.9 mmol, 43 %) isoliert werden.

¹H-NMR (500 MHz, DMSO-*d₆*) δ 3.75 (q, *J* = 7.0 Hz, 6 H, -SiOCH₂CH₃), 3.62 (t, *J* = 6.6 Hz, 2 H, -CH₂Cl), 2.49 - 2.43 (m, 8 H, -SCH₂-), 1.71 (dq, *J* = 7.9, 6.5 Hz, 2 H, - SiCH₂CH₂CH₂-), 1.61 - 1.46 (m, 8 H, -CH₂-), 1.42 - 1.31 (m, 8 H, -CH₂-), 1.15 (t, *J* = 7.0 Hz, 9 H, -SiOCH₂CH₃), 0.69 - 0.63 (m, 2 H, -SiCH₂CH₂CH₂-).

¹³C-NMR (126 MHz, DMSO-*d₆*) δ 57.64, 45.21, 34.03, 31.93, 31.04, 30.99, 30.89, 29.11, 29.02, 28.97, 27.75, 27.40, 25.83, 22.90, 18.14, 9.21.

ESI-MS *m*/*z* (%): 427.19 [M+H-EtOH]⁺ (100), 490.26 [M+Na]⁺ (10).

### 4. Herstellung des Silans gemäß Formel II) 1-(1-Thio-3-(triethoxysilyl)propyl)-6-(1-thio-6-thioacetyl-hexyl)-hexan; (EtO)₃Si(CH₂)₃S(CH₂)₆S(CH₂)₆SAc nach dem Syntheseschema gemäß Formel VI)

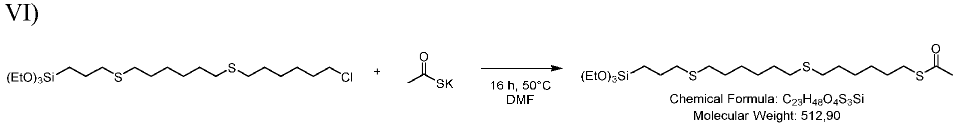

Zu einer Lösung von Kaliumthioacetat (1.20 g, 10.5 mmol, 1.5 Äq.) in DMF (20 mL) wurde tropfenweise bei 50 °C 1-(1-Thio-3-(triethoxysilyl)propyl)-6-(1-thio-6-chlorohexyl)-hexan (3.19 g, 6.7 mmol, 1.0 Äq.) über einen Zeitraum von 10 min gegeben. Die entstandene gelbliche Suspension wurde über Nacht bei 50 °C gerührt, anschließend auf RT abgekühlt und der weiße Feststoff (NaCl) wurde mittels Büchnertrichter abfiltriert. Zum Filtrat wurde Ethylacetat (50 mL) gegeben und die organische Phase wurde mit dem. Wasser (2 x 50 mL) und gesättigter NaCl-Lösung (2 x 50 mL) gewaschen und über Na₂SO₄ getrocknet. Das Lösungsmittel wurde unter vermindertem Druck entfernt. Es erfolgte keine säulenchromatographische Aufreinigung an Kieselgel, da das Rohprodukt eine ausreichend hohe Reinheit aufzeigte und die Ausbeute sonst deutlich geringer wäre. Nach Trocknen im Hochvakuum konnte die Zielverbindung in Form eines leicht gelben Öls (3.13 g, 6.1 mmol, 91 %) isoliert werden.

¹H-NMR (500 MHz, DMSO-*d₆*) δ 3.74 (q, *J* = 7.0 Hz, 6 H, -SiOCH₂CH₃), 2.81 (t, *J* = 7.2 Hz, 2 H, -CH₂SC(O)CH₃), 2.49 - 2.42 (m, 8 H, -SCH₂-), 2.31 (s, 3 H, -SC(O)CH₃), 1.60 - 1.52 (m, 2 H, -SiCH₂CH₂CH₂-), 1.53 - 1.45 (m, 8 H, -CH₂-), 1.33 (td, *J* = 7.1, 3.4 Hz, 8 H, -CH₂-), 1.14 (t, *J* = 7.0 Hz, 9 H, -SiOCH₂CH₃), 0.69 - 0.62 (m, 2 H, -SiCH₂CH₂CH₂-).

¹³C-NMR (126 MHz, DMSO-*d₆*) δ 195.10, 57.64, 34.01, 31.01, 30.98, 30.88, 30.48, 29.11, 29.00, 28.93, 28.23, 27.74, 27.67, 27.61, 22.89, 18.14, 9.20.

ESI-MS *m*/*z* (%): 467.21 [M+H-EtOH]⁺ (61), 530.28 [M+NH₄]⁺ (100).

Das hergestellte Silan gemäß Formel II) wird in eine erfindungsgemäße Kautschukmischung enthaltend wenigstens einen Dienkautschuk und wenigstens eine Kieselsäure als Füllstoff eingemischt. Bevorzugt wird das Silan gemäß Formel II) hierzu zuvor auf eine Kieselsäure aufgezogen und anschließend in dieser Form der Kautschukmischung zugegeben.

Das Aufziehen auf Kieselsäure erfolgt z. B. folgendermaßen:
Zu einer Suspension von Kieselsäure, z. B. granulierter Kieselsäure, in DMF wird bei Raumtemperatur eine Lösung des Silans gemäß Formel II) in dem gewünschten Verhältnis Kieselsäure / Silan gelöst in DMF gegeben. Beispielsweise werden Kieselsäure (VN3, Firma Evonik) und 14,4 phf des Silans gemäß Formel II) verwendet.

Die entstehende Suspension wird beispielsweise über Nacht bei 120 °C gerührt und anschließend wird das Lösungsmittel unter vermindertem Druck entfernt. Nach einem Tag Trocknen am Hochvakuum bei 40 °C wird die so erhaltene modifizierte Kieselsäure ggf. je nach gewünschter Feinheit mittels Mörser zerkleinert. Anschließend wird beispielsweise einen weiteren Tag bei 40 °C am Hochvakuum getrocknet.

Die erfindungsgemäße Kautschukmischung wird beispielsweise in Form eines vorgeformten Laufstreifens eines Fahrzeugreifens (wie oben beschrieben) auf einen Reifenrohling aufgebracht und anschließend mit diesem vulkanisiert.

Die Erfindung soll weiterhin anhand von Vergleichs- und Ausführungsbeispielen von Kautschukmischungen, die in Tabelle 1 zusammengefasst sind, näher erläutert werden. Die Vergleichsmischungen sind mit V, die erfindungsgemäßen Mischungen sind mit E gekennzeichnet. Die Mengenangabe der Silane in phf bezieht sich die jeweilige Menge an Kieselsäure.

Die Mischungsherstellung erfolgte unter üblichen Bedingungen in mehreren Stufen in einem Doppelschneckenextrusionsmischer. Aus sämtlichen Mischungen wurden Prüfkörper durch Vulkanisation hergestellt und mit diesen Prüfkörpern für die Kautschukindustrie typische Materialeigenschaften bestimmt.

Für die beschriebenen Tests an Prüfkörpern wurden folgende Testverfahren angewandt:
- Norm: ISO 868, DIN 53 505; Shore-A-Härte bei Raumtemperatur und 70 °C.
- Norm: ISO 4662, DIN 53 512; Rückprallelastizität bei Raumtemperatur und 70 °C.
- Norm: DIN 53 513; Maximaler Verlustfaktor tan δmax bei 55 °C als Maximalwert über den Dehnungssweep aus dynamisch-mechanischer Messung
- Norm: ASTM D6601; Verlustfaktor tan δ (10%) und Dynamischer Speichermodul (G'(1%), G'(100%)) vom zweiten Dehnungssweep bei 1 Hz und 70°C
- Norm: ISO 37, ASTM D 412, DIN 53 504; Reißdehnung bei Raumtemperatur und Bruchenergiedichte bei Raumtemperatur bestimmt im Zugversuch, wobei die Bruchenergiedichte die bis zum Bruch erforderliche Arbeit, bezogen auf das Volumen der Probe, ist.
   a) NR TSR: Naturkautschuk.
   b) SSBR: lösungspolymerisiertes Styrol-Butadien-Copolymer aus dem Stand der Technik mit Hydroxy-Gruppen, Nipol^{®} NS 612, Fa. Zeon Corporation.
   c) Kieselsäure: VN3, Fa. Evonik.
   d) Silan wurde in der entsprechenden Menge mit der genannten Kieselsäure in einem separaten Schritt vorsilanisiert / zur Reaktion gebracht. Kieselsäure und Silan wurden zusammen als modifizierter Füllstoff dem Mischprozess zugeführt.
   e) Weitere Zusatzstoffe: Zinkoxid / Alterungsschutzmittel / Ozonschutzmittel / Stearinsäure

Die erfindungsgemäße Mischung E1 (enthaltend das erfindungsgemäße Silan gemäß Formel II)) zeigt im Vergleich mit der Referenzmischung V1 (enthaltend das Silan TESPD) eine verringerte Rückprallelastizität RT und eine erhöhte Rückprallelastizität 70°C. Diese Vergrößerung der Differenz (Rb 70°C - Rb RT) ist vorteilhaft für den Zielkonflikt zwischen Rollwiderstand und Gripverhalten und zudem ist der maximale Verlustfaktor für E1 geringer als für V1. Diese Eigenschaften zeigen dem Fachmann eine Verbesserung des Rollwiderstandes in der Reifenanwendung.

Als Prediktor für gesteigerte Steifigkeit ist für E1 im Vergleich mit V1 eine Erhöhung der Shore A-Härte bei RT und 70 °C zu beobachten.

Ferner ist bei E1 eine erhöhte Reißdehnung und Bruchenergiedichte ggü. V1 zu beobachten.

Diese unterschiedlichen Eigenschaften führen zu einer verbesserten Haltbarkeit und Reißfestigkeit bei gleichzeitiger Verbesserung des Rollwiderstandverhaltens und zeigen deutlich den Vorteil der erfindungsgemäßen Silane gegenüber dem Stand der Technik.

**Tabelle 1**

| **Bestandteile** | **Einheit** | **V1** | **E1** |
|---|---|---|---|
| NR TSR a) | phr | 20 | 20 |
| SSBR b) | phr | 80 | 80 |
| Kieselsäure c) | phr | 95 | 95 |
| Silan TESPD d) | phf | 7.2 | - |
| Silan gemäß Formel II d) | phf | - | 15.6 |
| TDAE | phr | 35 | 35 |
| Weitere Zusatzstoffe e) | phr | 9 | 9 |
| DPG | phr | 2 | 2 |
| CBS | phr | 1.6 | 1.6 |
| Schwefel | phr | 2 | 2 |

| **Physikalische Messwerte** | **Einheit** | | |
|---|---|---|---|
| Shore A- Härte RT | ShA | 75.9 | 76.2 |
| Shore A- Härte 70 °C | ShA | 71.7 | 73.5 |
| Rückprallelastizität RT | % | 18.2 | 18.0 |
| Rückprallelastizität 70 °C | % | 46.4 | 47.6 |
| Tan d (max) | - | 0.170 | 0.163 |
| Reißdehnung RT (S3) | % | 117 | 151 |
| Bruchenergiedichte (S3) | J/cm³ | 5 | 8 |

## Patentansprüche

1. Silan gemäß Formel I):
I) (R¹)ₒSi-R²-S-R³-S-R³-S-X
wobei o = 3 ist und die Reste R¹ unabhängig voneinander gleich oder verschieden voneinander sein können und ausgewählt sind aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen, Arylgruppen mit 6 bis 20 Kohlenstoffatomen, Alkylgruppen mit 1 bis 10 Kohlenstoffatomen, Alkenylgruppen mit 2 bis 20 Kohlenstoffatomen, Alkinylgruppen mit 2 bis 20 Kohlenstoffatomen, Aralkylgruppen mit 7 bis 20 Kohlenstoffatomen, Halogeniden oder
Alkylpolyethergruppen -O-(R⁶-O)ᵣ-R⁵ wobei R⁶ gleich oder verschieden sind und verzweigte oder unverzweigte, gesättigte oder ungesättigte, aliphatische, aromatische oder gemischt aliphatisch/aromatische verbrückende C₁-C₃₀-Kohlenwasserstoffgruppen sind, vorzugsweise -CH₂-CH₂-, r eine ganze Zahl von 1 bis 30, vorzugsweise 3 bis 10 ist, und R⁵ unsubstituierte oder substituierte, verzweigte oder unverzweigte, terminale Alkyl-, Alkenyl-, Aryl- oder Aralkylgruppen, vorzugsweise -C₁₃H₂₇ Alkyl-Gruppe, sind
oder
zwei R¹ bilden eine cyclische Dialkoxygruppe mit 2 bis 10 Kohlenstoffatomen, oder es können zwei oder mehr Silane gemäß Formel I) über Reste R¹ verbrückt sein; und
wobei R² ausgewählt ist aus der Gruppe bestehend aus linearen oder verzweigten Alkylengruppen mit 1 bis 20 Kohlenstoffatomen oder Cycloalkylgruppen mit 4 bis 12 Kohlenstoffatomen oder Arylgruppen mit 6 bis 20 Kohlenstoffatomen oder Alkenylgruppen mit 2 bis 20 Kohlenstoffatomen, Alkinylgruppen mit 2 bis 20 Kohlenstoffatomen oder Aralkylgruppen mit 7 bis 20 Kohlenstoffatomen; und wobei die Reste R³ gleich sind und lineare Alkylenreste mit 4 bis 20 Kohlenstoffatomen sind; und
wobei die Gruppe X ein Wasserstoffatom oder eine -C(=O)-R⁴ Gruppe oder eine -SiR⁷₃-Gruppe ist, wobei R⁴ und R⁷ ausgewählt sind aus C₁-C₂₀-Alkylgruppen, C₄-C₁₀-Cycloalkylgruppen, C₆-C₂₀-Arylgruppen, C₂-C₂₀-Alkenylgruppen und C₇-C₂₀-Aralkylgruppen und R⁷ zusätzlich aus Alkoxygruppen mit 1 bis 10 Kohlenstoffatomen, Cycloalkoxygruppen mit 4 bis 10 Kohlenstoffatomen, Phenoxygruppen mit 6 bis 20 Kohlenstoffatomen ausgewählt ist; und wobei das Silan auch in Form von Oligomeren vorliegen kann, die durch Hydrolyse und Kondensation von Silanen der Formel I) entstehen.

2. Silan nach Anspruch 1, **dadurch gekennzeichnet, dass** die Reste R³ gleich sind und lineare Alkylenreste mit 4 bis 10 Kohlenstoffatomen, besonders bevorzugt 4 bis 8 Kohlenstoffatomen sind.

3. Silan nach einem der vorherigen Ansprüche, **dadurch gekennzeichnet, dass** die Gruppe X eine -C(=O)-R⁴ Gruppe ist, wobei R⁴ ausgewählt ist aus C₁-C₂₀-Alkylgruppen.

4. Silan nach einem der vorherigen Ansprüche **dadurch gekennzeichnet, dass** die Reste R¹ unabhängig voneinander gleich oder verschieden sind und Alkoxygruppen mit 1 bis 6 Kohlenstoffatomen oder Halogenide sind.

5. Silan nach einem der vorherigen Ansprüche **dadurch gekennzeichnet, dass** die Reste R¹ innerhalb einer Silylgruppe (R¹)ₒSi- gleich und Alkoxygruppen mit 1 oder 2 Kohlenstoffatomen, also Methoxygruppen oder Ethoxygruppen, ganz besonders bevorzugt Ethoxygruppen, sind, wobei o = 3 ist.

6. Silan nach einem der vorherigen Ansprüche **dadurch gekennzeichnet, dass** der Rest R² eine lineare oder verzweigte Alkylengruppe mit 2 bis 8 Kohlenstoffatomen ist.

7. Silan nach Anspruch 1, **dadurch gekennzeichnet, dass** es die folgende Formel II) aufweist:

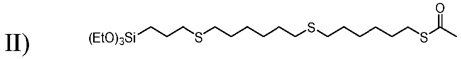

8. Kieselsäure, die mit wenigstens einem Silan nach einem der Ansprüche 1 bis 7 zumindest an deren Oberfläche modifiziert ist.

9. Kautschukmischung enthaltend wenigstens ein Silan nach einem der Ansprüche 1 bis 7 und/oder wenigstens eine Kieselsäure nach Anspruch 8.

10. Fahrzeugreifen, der die Kautschukmischung nach Anspruch 9 in wenigstens einem Bauteil aufweist.

11. Verfahren zur Herstellung des Silanes nach Anspruch 1, wobei es wenigstens folgende Verfahrensschritte umfasst:
a) Bereitstellung einer Substanz (R¹)ₒSi-R²-SH ;
b) Bereitstellung einer Substanz Cl-R³-Cl ;
c) Umsetzung der Substanz aus Schritt a) mit der Substanz aus Schritt b) unter Anwesenheit einer Base zu (R¹)ₒSi-R²-S-R³-Cl;
d) Umsetzung von (R¹)ₒSi-R²-S-R³-Cl aus Schritt c) mit einem metallischen Hydrogensulfid (M-S-H) zu (R¹)ₒSi-R²-S-R³-SH, wobei M für Metall steht;
e) Umsetzung von (R¹)ₒSi-R²-S-R³-SH aus Schritt d) mit einer weiteren Portion von Cl-R³-Cl zu (R¹)ₒSi-R²-S-R³-S-R³-Cl;
f) Bereitstellung einer Substanz M-S-X, wobei X wie in Anspruch 1 definiert ist, und M für Metall steht;
g) Umsetzung von (R¹)ₒSi-R²-S-R³-S-R³-Cl mit M-S-X zu dem Silan gemäß Formel I): (R¹)ₒSi-R²-S-R³-S-R³-S-X;
h) Optional Aufreinigung des in Schritt g) erhaltenen Silans gemäß Formel I),
wobei die beiden M gemäß Schritt d) und f) unabhängig voneinander gleich oder verschieden sein können.

## Claims

1. Silane of formula I):
I) (R¹)ₒSi-R²-S-R³-S-R³-S-X
where o = 3 and the R¹ radicals may be identical or different and are selected from alkoxy groups having 1 to 10 carbon atoms, cycloalkoxy groups having 4 to 10 carbon atoms, phenoxy groups having 6 to 20 carbon atoms, aryl groups having 6 to 20 carbon atoms, alkyl groups having 1 to 10 carbon atoms, alkenyl groups having 2 to 20 carbon atoms, alkynyl groups having 2 to 20 carbon atoms, aralkyl groups having 7 to 20 carbon atoms, halides, or
alkyl polyether groups -O-(R⁶-O)ᵣ-R⁵ where R⁶ are identical or different and are branched or unbranched, saturated or unsaturated, aliphatic, aromatic or mixed aliphatic/aromatic bridging C₁-C₃₀ hydrocarbon groups, preferably -CH₂-CH₂-, r is an integer from 1 to 30, preferably 3 to 10, and R⁵ are unsubstituted or substituted, branched or unbranched, terminal alkyl, alkenyl, aryl or aralkyl groups, preferably - C₁₃H₂₇ alkyl group,
or
two R¹ form a cyclic dialkoxy group having 2 to 10 carbon atoms, or two or more silanes of formula I) may be bridged via R¹ radicals; and
where R² is selected from the group consisting of linear or branched alkylene groups having 1 to 20 carbon atoms or cycloalkyl groups having 4 to 12 carbon atoms or aryl groups having 6 to 20 carbon atoms or alkenyl groups having 2 to 20 carbon atoms, alkynyl groups having 2 to 20 carbon atoms or aralkyl groups having 7 to 20 carbon atoms; and
where the R³ radicals are identical and are linear alkylene radicals having 4 to 20 carbon atoms; and
where the X group is a hydrogen atom or a -C(=O)-R⁴ group or an -SiR⁷₃ group, where R⁴ and R⁷ are selected from C₁-C₂₀-alkyl groups, C₄-C₁₀-cycloalkyl groups, C₆-C₂₀-aryl groups, C₂-C₂₀-alkenyl groups and C₇-C₂₀-aralkyl groups, and R⁷ is additionally selected from alkoxy groups having 1 to 10 carbon atoms, cycloalkoxy groups having 4 to 10 carbon atoms, phenoxy groups having 6 to 20 carbon atoms; and where the silane may also take the form of oligomers formed via hydrolysis and condensation of silanes of the formula I).

2. Silane according to Claim 1, **characterized in that** the R³ radicals are identical and are linear alkylene radicals having 4 to 10 carbon atoms, more preferably 4 to 8 carbon atoms.

3. Silane according to either of the preceding claims, **characterized in that** the X group is a -C(=O)-R⁴ group where R⁴ is selected from C₁-C₂₀-alkyl groups.

4. Silane according to any of the preceding claims, **characterized in that** the R¹ radicals are identical or different and are alkoxy groups having 1 to 6 carbon atoms or halides.

5. Silane according to any of the preceding claims, **characterized in that** the R¹ radicals within a silyl group (R¹)ₒSi- are identical and are alkoxy groups having 1 or 2 carbon atoms, i.e. methoxy groups or ethoxy groups, most preferably ethoxy groups, where o = 3.

6. Silane according to any of the preceding claims, **characterized in that** the R² radical is a linear or branched alkylene group having 2 to 8 carbon atoms.

7. Silane according to Claim 1, **characterized in that** it has the following formula II):

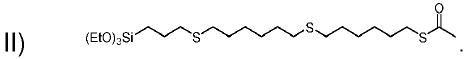

8. Silica modified at least on its surface with at least one silane according to any of Claims 1 to 7.

9. Rubber mixture containing at least one silane according to any of Claims 1 to 7 and/or at least one silica according to Claim 8.

10. Vehicle tyre comprising the rubber mixture according to Claim 9 in at least one component.

11. Process for preparing the silane according to Claim 1, which comprises at least the following process steps:
a) providing a substance (R¹)ₒSi-R²-SH;
b) providing a substance Cl-R³-Cl;
c) reacting the substance from step a) with the substance from step b) in the presence of a base to give (R¹)ₒSi-R²-S-R³-Cl;
d) reacting (R¹)ₒSi-R²-S-R³-Cl from step c) with a metallic hydrogensulfide (M-S-H) to give (R¹)ₒSi-R²-S-R³-SH, where M is metal;
e) reacting (R¹)ₒSi-R²-S-R³-SH from step d) with a further portion of Cl-R³-Cl to give (R¹)ₒSi-R²-S-R³-S-R³-Cl;
f) providing a substance M-S-X where X is as defined in Claim 1 and M is metal;
g) reacting (R¹)ₒSi-R²-S-R³-S-R³-Cl with M-S-X to give the silane of formula I):
(R¹)ₒSi-R²-S-R³-S-R³-S-X;
h) optionally purifying the silane of formula I) obtained in step g),
where the two instances of M in steps d) and f) may be identical or different.

## Revendications

1. Silane selon la formule (I) :
l) (R¹)ₒSi-R²-S-R³-S-R³-S-X
dans laquelle o = 3 et les radicaux R¹ peuvent être, indépendamment les uns des autres, identiques ou différents et sont choisis parmi des groupes alcoxy dotés de 1 à 10 atomes de carbone, des groupes cycloalkyle dotés de 4 à 10 atomes de carbone, des groupes phénoxy dotés de 6 à 20 atomes de carbone, des groupes aryle dotés de 6 à 20 atomes de carbone, des groupes alkyle dotés de 1 à 10 atomes de carbone, des groupes alcényle dotés de 2 à 20 atomes de carbone, des groupes alcynyle dotés de 2 à 20 atomes de carbone, des groupes aralkyle dotés de 7 à 20 atomes de carbone, des halogénures ou
des groupes polyéther d'alkyle -O-(R⁶-O)ᵣ-R⁵, dans lesquels R⁶ sont identiques ou différents et sont des groupes hydrocarbonés en C₁-C₃₀ pontants, ramifiés ou non ramifiés, saturés ou insaturés, aliphatiques, aromatiques ou mixtes aliphatiques/aromatiques, de préférence -CH₂-CH₂-, r est un nombre entier de 1 à 30, préférablement de 3 à 10, et R⁵ sont des groupes alkyle, alcényle, aryle ou aralkyle terminaux, non substitués ou substitués, ramifiés ou non ramifiés, de préférence un groupe alkyle en -C₁₃H₂₇,
ou
deux R¹ forment un groupe dialcoxy cyclique doté de 2 à 10 atomes de carbone ou au moins deux silanes selon la formule l) peuvent être pontés par l'intermédiaire de radicaux R¹ ; et
dans lequel R² est choisi dans le groupe constitué de groupes alkyle linéaires ou ramifiés dotés de 1 à 20 atomes de carbone ou de groupes cycloalkyle dotés de 4 à 12 atomes de carbone ou de groupes aryle dotés de 6 à 20 atomes de carbone ou de groupes alcényle dotés de 2 à 20 atomes de carbone, de groupes alcynyle dotés de 2 à 20 atomes de carbone ou de groupes aralkyle dotés de 7 à 20 atomes de carbone ; et
dans lequel les radicaux R³ sont identiques et sont des radicaux alkyle linéaires dotés de 4 à 20 atomes de carbone ;
dans lequel le groupe X est un atome d'hydrogène ou un groupe -C(=O)-R⁴ ou
un groupe -SiR⁷₃, dans lesquels R⁴ et R⁷ sont choisis parmi des groupes alkyle en C₁-C₂₀, des groupes cycloalkyle en C₄-C₁₀, des groupes aryle en C₆-C₂₀, des groupes alcényle en C₂-C₂₀ et des groupes aralkyle en C₇-C₂₀ et R⁷ est en outre choisi parmi des groupes alcoxy dotés de 1 à 10 atomes de carbone, des groupes cycloalcoxy dotés de 4 à 10 atomes de carbone, des groupes phénoxy dotés de 6 à 20 atomes de carbone ; et dans lequel le silane peut également se présenter sous la forme d'oligomères qui sont formés par hydrolyse et condensation des silanes de formule I).

2. Silane selon la revendication 1, **caractérisé en ce que** les radicaux R³ sont identiques et sont des radicaux alkyle linéaires dotés de 4 à 10 atomes de carbone, particulièrement préférablement de 4 à 8 atomes de carbone.

3. Silane selon l'une quelconque des revendications précédentes, **caractérisé en ce que** le groupe X est un groupe -C(=O)-R⁴, dans lequel R⁴ est choisi parmi des groupes alkyle en C₁-C₂₀.

4. Silane selon l'une quelconque des revendications précédentes, **caractérisé en ce que** les radicaux R¹, indépendamment les uns des autres, sont identiques ou différents et sont des groupes alcoxy dotés de 1 à 6 atomes de carbone ou des halogénures.

5. Silane selon l'une quelconque des revendications précédentes, **caractérisé en ce que** les radicaux R¹ à l'intérieur d'un groupe silyle (R¹)ₒSi- sont identiques et sont des groupes alcoxy dotés de 1 ou 2 atomes de carbone, donc des groupes méthoxy ou des groupes éthoxy, tout particulièrement préférablement des groupes éthoxy, dans lequel o = 3.

6. Silane selon l'une quelconque des revendications précédentes, **caractérisé en ce que** le radical R² est un groupe alkylène linéaire ou ramifié doté de 2 à 8 atomes de carbone.

7. Silane selon la revendication 1, **caractérisé en ce qu'**il présente la formule II) suivante :

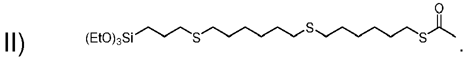

8. Acide silicique qui est modifié, au moins sur sa surface, avec au moins un silane selon l'une des revendications 1 à 7.

9. Mélange de caoutchouc contenant au moins un silane selon l'une des revendications 1 à 7 et/ou au moins un acide silicique selon la revendication 8.

10. Pneumatique de véhicule qui présente le mélange de caoutchouc selon la revendication 9 dans au moins un élément.

11. Procédé pour fabriquer le silane selon la revendication 1, ledit procédé comprenant au moins les étapes suivantes :
a) fournir une substance (R¹ )ₒSi-R²-SH ;
b) fournir une substance Cl-R³-Cl ;
c) faire réagir la substance de l'étape a) avec la substance de l'étape b) en présence d'une base pour obtenir (R¹)ₒSⁱ-R²-S-R³-Cl ;
d) faire réagir (R¹)ₒSi-R²-S-R³-Cl de l'étape c) avec un sulfure d'hydrogène métallique (M-S-H) pour obtenir (R¹)ₒSi-R²-S-R³-SH, M désignant un métal ;
e) faire réagir (R¹)ₒSi-R²-S-R³-SH de l'étape d) avec une autre partie de Cl-R³-Cl pour donner (R¹)ₒSi-R²-S-R³-S-R³-Cl ;
f) fournir une substance M-S-X, dans laquelle X est défini tel que dans la revendication 1 et M désigne un métal ;
g) faire réagir (R¹)ₒSi-R²-S-R³-S-R³-Cl avec M-S-X pour obtenir le silane selon la formule I) : (R¹)ₒSi-R²-S-R³-S-R³-S-X ;
h) purifier facultativement le silane selon la formule I) obtenu à l'étape g),
dans lequel les deux M selon les étapes d) et f) peuvent être, indépendamment l'un de l'autre, identiques ou différents.
